# EUROPEAN PATENT APPLICATION

(11) **EP 4 368 681 A1**
(43) Date of publication of application: **15.05.2024**
(21) Application number: 23205274.6
(22) Date of filing: 23.10.2023
(51) Int. Cl.: C09J 7/40, G09F 3/10

(54) **A RELEASE LINER AND A LABEL LAMINATE**

(30) Priority: 08.11.2022 FI 20226006
(71) Applicant: UPM Raflatac Oy, 33310 Tampere (FI)
(72) Inventor: Janicki, Bartosz, 00100 Helsinki (FI); Czarnecka, Marta, 00100 Helsinki (FI); Tumilowicz, Joanna, 00100 Helsinki (FI)
(74) Representative: Berggren Oy

(57) **Abstract**

This specification relates to a release liner (101, 201) for a label. Further, the specification relates to a label laminate (210), to its use as well as to a method of manufacturing the label laminate. The solution aims at reducing or eliminating build-up of static electricity on label laminates, especially during printing and converting processes. The release liner (101,201) comprises a paper-based substrate (102, 202), the paper-based substrate (102, 202) having a first surface (102a) and a second surface (102b). The first surface (102a) comprises a release coating (103, 203) and the second surface (102b) comprises an antistatic coating (104, 204). The antistatic coating (104, 204) comprises a binder and an antiblocking agent.

## Description

### Technical field

This specification relates to a release liner. Further, the specification relates to a label laminate, to its use as well as to a method of manufacturing the label laminate.

### Background

Label laminates with filmic faces and paper-based release liners are problematic during printing and converting processes due to the electrical charge created between the filmic face and the paper-based release liner. In printing, the electrical charge causes the laminates to be printed to cling to each other, thereby causing paper jams that pause the printing process. Therefore, solutions for avoiding the electrical charging of the label laminates are desired.

### Summary

An antistatic coating for a release liner of a label laminate as a solution for reducing or eliminating build-up of static electricity on label laminates, especially during printing and converting processes, is provided. The coating composition comprises a binder and an anti-blocking agent.

Thus, according to an embodiment, a release liner for a label is provided. The release liner comprises a paper-based substrate. The paper-based substrate has a first surface and a second surface. The first surface comprises a release coating and the second surface comprises an antistatic coating. The antistatic coating comprises a binder and an anti-blocking agent.

Further, a label laminate comprising a filmic face, a pressure sensitive adhesive and a release liner as disclosed above is provided. The filmic face is adjoined to the release liner via the pressure sensitive adhesive.

Still further, a method of manufacturing a label laminate is provided. The method comprises
- providing a filmic material as a face,
- providing a release liner comprising a paper-based substrate, the paper-based substrate having a first surface and a second surface, the first surface comprising a release coating,
- coating the face or the first surface of the release liner comprising the release coating with a pressure sensitive adhesive so as to form an adhesive layer,
- coating the second surface of the release liner with an antistatic coating comprising a binder and an anti-blocking agent, and
- laminating the release liner together with the face in such a way that the adhesive layer is arranged in between the face and the release liner so as to form the label laminate.

Finally, use of the label laminate as disclosed for providing a label is provided.

### Brief description of the drawings

- Fig. 1: illustrates, by way of an example, a side view in the Sₓ,S_{y}-plane of a release liner according to an embodiment,
- Fig. 2: illustrates, by way of an example, a side view in the Sₓ,S_{y}-plane of a label laminate according to an embodiment.

The figures are schematic. The figures are not in any particular scale.

### Detailed description

The solution is described in the following in more detail with reference to some embodiments, which shall not be regarded as limiting.

In this description and claims, the percentage values relating to an amount of a material are percentages by weight (wt.%) unless otherwise indicated. Unit of thickness expressed as microns corresponds to µm. Unit of temperature expressed as degrees C corresponds to °C. The following reference numbers and denotations are used in this application:

| | |
|---|---|
| Sₓ, S_{y}, S_{z} | 3D coordinates |
| 101, 201 | release liner |
| 102, 202 | paper-based substrate |
| 102a | first surface |
| 102b | second surface |
| 103, 203 | release coating |
| 104, 204 | antistatic coating |
| 210 | label laminate |
| 211 | filmic face |
| 212 | pressure sensitive adhesive |

A label is a piece of material to be applied onto articles of different shapes and materials. An article to be labelled may be a package. A label comprises at least a face material also referred to as a face stock or a face. A typical way to adhere the label onto an article is by use of adhesive. The label comprising an adhesive layer is referred to as an adhesive label. A label comprising pressure sensitive adhesive may be referred to as a pressure sensitive adhesive (PSA) label. PSA labels may also be referred to as self-adhesive labels.

Labels may be used in wide variety of labelling applications and end-use areas, such as labelling of food, home and personal care products, industrial products, pharmaceutical and health care products, beverage and wine bottles, other consumables etc. Labels enable providing information, like product specification, on the labelled product(s). Information, e.g. print of a label, may comprise human-readable information, like image(s), logo(s), text, and/or machine-readable information, like bar code(s), QR (Quick Response) code(s). The surface of the labelled article/item may be for example plastics, glass, metal, or paper based. The labelled article/item may be for example a container, such as a bottle, jar, canister, can, tin or the like. The label may also be applied to semi-rigid or flexible packages used for e.g. packaging of food.

Term "face" refers to a top substrate of the label, also called as a face stock, a face material or in case of plastic material a face film. The face may have a monolayer structure or a multilayer structure comprising at least two layers. In case of a plastic material the multilayer filmic structure may be co-extruded or it may comprise several layers laminated together. The face is the layer that is adhered to the surface of an article during labelling through an adhesive layer. The face may comprise e.g. printing in order to provide information and or visual effect. Further, the label may contain additional layers, for example top coatings or overlaminates to protect the top surface and/or print of the label against rubbing or other external stress.

Term "release liner" refers to a structure comprising a substrate and a release layer on a surface of the substrate contacting the adhesive in a label laminate. The substrate may also be called a backing material. The release liner may comprise a release coating. The release coating comprises a release agent, which is a chemical having low surface tension. The release coating may be used in order to prevent other materials from bonding to it and to provide a release effect. Release liners of the label laminates may serve one or more useful functions: they may be used as a carrier sheet onto which the adhesive is coated; they may protect the adhesive layer during storage and transportation; they may provide a support for labels during die-cutting and printing, and ultimately they may provide the release substrate carrying the labels for dispensing onto the items/articles to be labelled.

Term "label laminate", also referred to as an adhesive label laminate refers to a product comprising a face, adhesive and a release liner. In the label laminate the face is laminated together with the release liner having the adhesive in between. The label laminate may be a continuous structure from which the individual labels may be die-cut. The release liner of the label laminate is typically removed prior to labelling i.e. attaching the label onto the surface of an item to be labelled.

Term "web" refers to a continuous sheet of material. The web is generally processed by moving over rollers. Between processing stages, webs may be stored and transported as rolls.

Term "machine direction" refers to manufacturing direction of a web. Machine direction may also refer to a circumferential direction of a roll. Term "cross machine direction" or "cross direction" refers to a direction that is transversal to the machine direction.

This specification aims to provide solutions for reducing or eliminating build-up of static electricity on label laminates, especially during printing and converting processes.

### Antistatic coating

An antistatic coating for a release liner of a label laminate is provided. The antistatic coating may also be called an electroconductive coating. The coating composition comprises a binder and an anti-blocking agent. The antistatic coating is configured to make the material itself conductive.

The anti-blocking agent is a wax, preferably an amide wax. The wax comprises amides of fatty acids. The amide wax both neutralises the static charge as well as reduces friction. The wax is in the form of microspheres in the antistatic coating.

The amide wax may have a softening/melting/dropping point in the range of from about 85 to about 155 degrees C. High melting temperature ensures stability during coating and/or drying processes as well as long-term stability in a variety of environmental conditions. The amide wax may have particle size distribution (D98) in the range of from 0.5 to 20 µm. Due to the polar amide domains, the amide waxes aid adhesion to paper substrate materials and as a result promote anchorage.

Suitable amide waxes are ethylene bis(stearamide) (EBS) waxes, erucamice waxes, oleamide waxes, stearamide waxes and mixtures thereof, for example. In addition, primary amides such as octadecanamide, docosanamide, (Z)-octadec-9-enamide, (Z)-docos-13-enamide, and the like; secondary amides such as (Z)-N-octadecyldocos-13-enamide, N-docos-13-enyldocos-13-enamide, N-octadec-9-enylhexadecanamide, N-octadecyloctadecanamide, N-[(E)-docos-13-enyl]octadecanamide, and the like; ethylene bisamides such as, N-[2-(octadecanoylamino)ethyl]octadecanamide, N,N-ethylenebisolamide and similar also be utilized. The above amides can also be used in any combination. Suitable amide waxes include also modified amide waxes, such as an ester wax modified ethylene bis(stearamide). Carnauba wax, candelilla wax and beeswax are the main commercial components of wax esters.

According to an embodiment, the amide wax is ethylene bis(stearamide) (EBS, N, N'-(ethane-1,2-diyl)di(octadecanamide), N,N'-ethylene bis(stearamide), N-[2-(octadecanoylamino)ethyl]octadecan-amide). EBS has a high melting temperature (over 140 degrees C) which ensures stability during coating and/or drying processes as well as long-term stability in a variety of environmental conditions. Further, the high melting point also enhances stability in thermal transfer (TTR) printing. EBS is non-toxic and due to its polar amide domains it aids adhesion to paper substrate materials and as a result promotes anchorage. Further, the presence of two amide groups may have an effect in neutralising the static charge. In one embodiment, EBS is used in the form of dispersion.

According to an embodiment, the amount of the anti-blocking agent is at least 15 wt.%, for example from 15 to 50 wt.% of the dry weight of the antistatic coating. In an example, the amount of the anti-blocking agent is from 20 to 40 wt.%, preferably 30 wt.% of the dry weight of the antistatic coating.

The effect of the binder is to provide anchorage of wax microspheres to a paper-based substrate of a release liner.

The binder is a water-based, i.e. aqueous or water-borne, coating. The water-based coating is non-tacky. The binder remains non-tacky at standard storage conditions (about 23 degrees C) for the standard storage time (month(s)) of the label laminates. Also, the binder remains non-tacky during and after the printing process, when the label laminate is exposed to the high printer temperatures for a short time period (second(s)). For example, in laser printing process the maximum temperature encountered by the label laminate can be as high as 190 degrees C, the typical temperature being about 160 degrees C. Non-tackiness means that the coating does not cause blocking.

In an example, the binder is an acrylic coating. The acrylic coating may also be referred to as an acrylic paint or printing ink. The acrylic coating is a water-based acrylic emulsion (also called aqueous acrylic dispersion). The water-based acrylic emulsion comprises an acrylic-based copolymer, i.e. an acrylate copolymer. The acrylic-based copolymer is derived from components including monomers comprising acrylate monomer(s). Acrylate monomers in general are based on the structure of acrylic acid. Acrylic acid comprises a vinyl group and a carboxylic acid ester end or a nitrile. The binder may comprise organic additive(s), such as a coalescing agent. The binder may comprise a filler. The filler may be titanium dioxide. The binder may comprise an inorganic pigment. Preferably the binder has a solid content of at least 25 %, such as 35-45 %.

In an example, the acrylic-based copolymer is a styrene-acrylic copolymer. The styrene-acrylic copolymer may comprise any blend of styrene, styrene-derivative, methacrylate and acrylate monomers.

For example, the binder may comprise from 25 to 30 wt.% styrene-acrylic copolymer, from 5 to 10 wt.% inorganic pigment and up to 6 wt.% organic additive(s).

The antistatic coating composition may be formulated further to include additional ingredients, such as defoamer(s), thickener(s), biocide(s), surfactant(s), pigment(s) and/or dye(s).

### Release liner

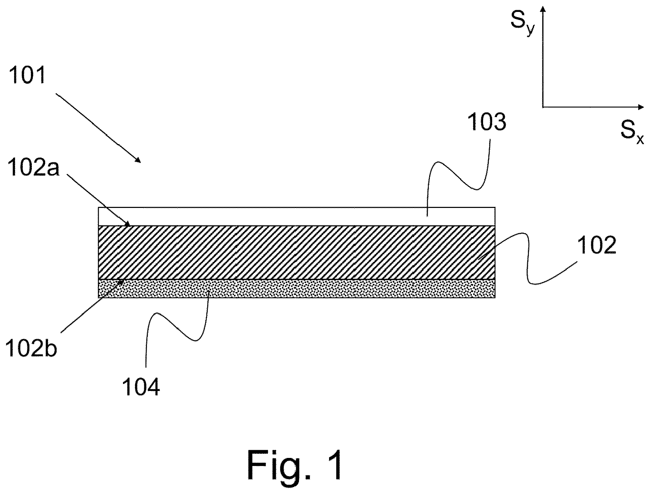

A release liner for a label is provided. Figure 1 illustrates a release liner 101 according to an embodiment. The release liner 101 comprises a paper-based substrate 102. The paper-based substrate 102 has a first surface 102a and a second surface 102b. The first surface 102a comprises a release coating 103 and the second surface 102b comprises an antistatic coating 104 as described above. The first surface 102a comprising the release coating 103 is intended for receiving the adhesive side of the adhesive label. The second surface 102b comprising the antistatic coating 104 is arranged as the back side of the label laminate, when the face is the front side of the label laminate. The antistatic coating 104 of the release liner may have a grammage of at least 1.5 g/m². For example, the antistatic coating 104 may have a grammage of from 1.5 to 4 g/m².

Surface area of the second surface of the substrate of the release liner may be 100 % covered by the antistatic coating. Alternatively, the second surface of the substrate of the release liner may be only partly covered by the antistatic coating. According to an embodiment, at least 50 % of the second surface of the substrate comprises the antistatic coating. In an example, from 60 to 90 % of the second surface of the substrate comprises the antistatic coating. When the second surface of the substrate of the release liner is only partly covered by the antistatic coating, cost and materials savings are achieved.

The second surface of the substrate of the release liner may be pattern coated with the antistatic coating. The antistatic coating may be arranged as machine direction continuous section(s), such as stripe(s), and/or as cross machine direction continuous section(s). The continuity means that the coating sections are always connected, regardless of the shape of the coating sections. The continuity of the coating sections enables efficient antistatic properties in use. Besides stripes, the coating sections include for example a continuous pattern of squares or rhombs, distinct squares or rhombs being connected by their vertices. The antistatic coating may be arranged as two or more machine direction continuous sections and/or as two or more cross machine direction continuous sections, the sections altogether covering at least 50 %, for example from 60 to 90 % of the second surface of the substrate.

The substrate of the release liner may be of any available liner paper grade, such as kraft paper, glassine paper, super calendered kraft (SCK) paper or clay coated kraft (CCK) paper.

### Label laminate

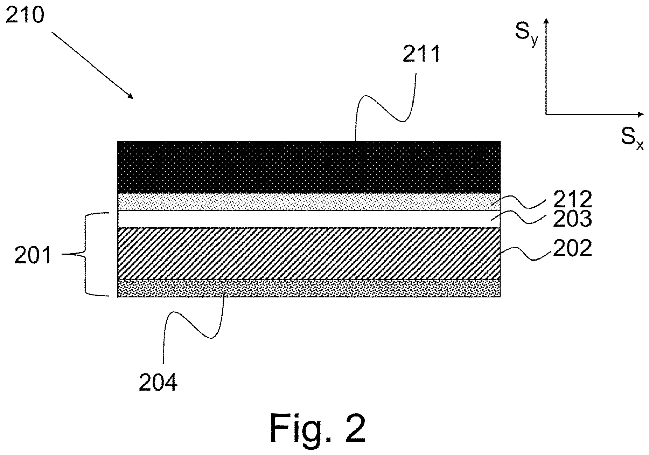

A label laminate 210 is provided. The label laminate 210 comprises a filmic face 211, a pressure sensitive adhesive 212 and a release liner 201 as described above. The filmic face 211 is adjoined to the release liner 201 via the pressure sensitive adhesive 212, as illustrated in Figure 2.

The label laminate may have a thickness of at least 95 µm. In an example, the label laminate has a thickness of from 95 to 250 µm. Thickness of the label laminate refers to the total thickness of the label laminate materials, i.e. the filmic face, pressure sensitive adhesive and the release liner comprising release coating and antistatic coating.

The filmic face may comprise or consist of for example polyester (polyethene terephthalate, PET) or polypropylene (PP).

According to an embodiment, the label laminate is a sheet of A4 size (210 x 297 mm) and is to be printed with commercial (office) printer. Alternatively, the label laminate may be a continuous web structure arranged on a roll. Labels manufactured from the label laminate are aimed at multiple end uses. Basically the labels may be used for all labelling end uses utilizing labels with filmic faces.

The manufacturing process of the label laminate comprises providing a filmic material as a face and providing a release liner comprising a paper-based substrate, the paper-based substrate having a first surface and a second surface, the first surface comprising a release coating. The method further comprises coating the face or the first surface of the release liner comprising the release coating with a pressure sensitive adhesive so as to form an adhesive layer, coating the second surface of the release liner with an antistatic coating as disclosed herein, and laminating the release liner together with the face in such a way that the adhesive layer is arranged in between the face and the release liner so as to form the label laminate. The method may further comprise cutting the label laminate web so as to form label laminate of distinct size, such as of A4 size.

When printing a stock of conventional label laminate sheets, electrical charge created between the filmic face of one sheet and the paper-based release liner of another sheet may cause problems. The electrical charge causes the distinct sheets to cling to each, thereby causing a paper jam in the printer. Each paper jam relates to material waste, since for each paper jam from 3 to 5 label laminate sheets may be wasted. Further, each paper jam also wastes time, since the removal of jammed paper may take a minute or even two. The label laminate disclosed herein comprising the antistatic coating alleviates these problems.

### Example

An exemplary label laminate comprising a PET face, a pressure sensitive adhesive and a release liner was produced. The release liner included a paper-based substrate. The first surface of the paper-based substrate comprised a release coating and more than 50 % of the second surface of the paper-based substrate comprised an antistatic coating.

The antistatic coating comprised a water-based acrylic coating as a binder. The water-based acrylic coating comprised a styrene-acrylic copolymer and had a solid content of 40 %. The amount of the styrene-acrylic copolymer was from 25 to 30 wt.%. The water-based acrylic coating also comprised an inorganic pigment, and titanium dioxide as a filler. The amount of the inorganic pigment was from 5 to 10 wt.%.

The antistatic coating also comprised ethylene bis(stearamide) as an anti-blocking agent. The amount of the anti-blocking agent was 30 wt.% of the dry weight of the antistatic coating.

Performance of the label laminate disclosed above was demonstrated by measuring charge of the laminate sheets during printing. Charge was measured by a voltmeter (Ultra Stable Surface DC Volt Meter USSVM2). A typical office printer (Xerox Workcenter 7855) was used for printing. Conventional label laminate sheets without an antistatic coating were used as reference material. Firstly, it is to be noted that within a same period of time, it was possible to print about 100 sheets of the reference material compared to 500 sheets of the label laminate according to this disclosure. The lower yield of the printed reference material was due to the paper jams and the measures needed to prepare the printer to continue the printing. The charge values of the reference material measured by the voltmeter are characterized by fast increases and broad fluctuation range, the highest charge values being 2000 V or even above. For the label laminate sheets according to this disclosure, the measured charge values are shown to be lower (up to 1000 V) and the fluctuation range is narrower. Further, the charge values are rather negative than positive, thus suggesting that the antistatic coating is capable of removing charge.

## Claims

1. A release liner (101, 201) for a label, the release liner (101, 201) comprising a paper-based substrate (102, 202), the paper-based substrate (102, 202) having a first surface (102a) and a second surface (102b), wherein the first surface (102a) comprises a release coating (103, 203) and the second surface (102b) comprises an antistatic coating (104, 204), the antistatic coating (104, 204) comprising a binder and an anti-blocking agent.

2. The release liner (101, 201) according to claim 1, wherein amount of the anti-blocking agent is at least 15 wt.% of the dry weight of the antistatic coating.

3. The release liner (101, 201) according to claim 1 or 2, wherein amount of the anti-blocking agent is from 15 to 50 wt.% of the dry weight of the antistatic coating.

4. The release liner (101, 201) according to any of the preceding claims, wherein the anti-blocking agent is an amide wax.

5. The release liner (101, 201) according to claim 4, wherein the amide wax is ethylene bis(stearamide).

6. The release liner (101, 201) according to any of the preceding claims, wherein the binder is an acrylic coating.

7. The release liner (101, 201) according to any of the preceding claims, wherein at least 50 % of the second surface of the paper-based substrate comprises the antistatic coating (104, 204).

8. The release liner (101, 201) according to any of the preceding claims, wherein the antistatic coating (104, 204) of the second surface of the paper-based substrate is arranged as machine direction and/or cross machine direction continuous section(s).

9. A label laminate (210) comprising a filmic face (211), a pressure sensitive adhesive (212) and a release liner (101, 201) according to any of the claims 1-8, wherein the filmic face (211) is adjoined to the release liner (101, 201) via the pressure sensitive adhesive (212).

10. A method of manufacturing a label laminate (210) according to claim 9, the method comprising
- providing a filmic material as a face (211),
- providing a release liner (101, 201) comprising a paper-based substrate (102, 202), the paper-based substrate (102, 202) having a first surface (102a) and a second surface (102b), the first surface (102a) comprising a release coating (103, 203),
- coating the face (211) or the first surface (102a) of the release liner comprising the release coating (103, 203) with a pressure sensitive adhesive (212) so as to form an adhesive layer,
- coating the second surface (102b) of the release liner with an antistatic coating (104, 204) comprising a binder and an anti-blocking agent, and
- laminating the release liner (101, 201) together with the face (211) in such a way that the adhesive layer is arranged in between the face (211) and the release liner (101, 201) so as to form the label laminate (210).

11. Use of the label laminate (210) according to claim 9 for providing a label.
